# EUROPÄISCHE PATENTANMELDUNG

(11) **EP 2 764 807 A1**
(43) Veröffentlichungstag der Anmeldung: **13.08.2014**
(21) Anmeldenummer: 13405031.9
(22) Anmeldetag: 12.02.2013
(51) Int. Cl.: A47J 42/06

(54) **Mahlwerk**

(71) Anmelder: JURA Elektroapparate AG, 4626 Niederbuchsiten (CH)
(72) Erfinder: Sahli, Georg, 3424 Ersigen (CH); Probst, Stephan, 4553 Subingen (CH)
(74) Vertreter: EGLI-EUROPEAN PATENT ATTORNEYS

(57) **Zusammenfassung**

Es wird ein neues Mahlwerk (1) beschrieben, welches zum Mahlen von Kaffeebohnen dient, mit einem ersten Mahlelement (11) und einem zweiten Mahlelement (15), wobei die beiden Mahlelemente (11, 15) relativ zueinander derart drehbar sind, dass Kaffeebohnen durch die Mahlelemente zu einem Kaffeepulver vermahlt werden, und mit einem mit dem ersten Mahlelement drehbaren Mitnehmerrad (25), welche dazu dient, auf seinem Randbereich das gemahlene Kaffeepulver über einen Austrittsspalt (6-3) aus den Mahlelementen (11, 15) hinaus zu führen. Der Randbereich des Mitnehmerrades (25) ist zu den Mahlelementen (11, 15) hin verjüngt mit einem konkaven Profil ausgebildet, derart, dass ein innerer hoher Rand (Ri) und ein äusserer tiefer Rand (Ra) gebildet sind, und das Mitnehmerrad (25) mehrere im Randbereich über den Umfang verteilte Mitnehmerflügel (26) aufweist.

## Beschreibung

Die Erfindung bezieht sich auf ein Mahlwerk, welches zum Mahlen von Kaffeebohnen dient.

Ein solches Mahlwerk ist üblicherweise in Kombination mit einer automatischen Kaffeemaschine vorgesehen, kann jedoch auch allein verwendbar sein.

Ein Mahlwerk nach dem bekannten Stand der Technik umfasst gewöhnlich:
- eine Mahleinrichtung, welche zum Mahlen von Kaffeebohnen dient und zu diesem Zweck ein erstes Mahlelement und ein zweites Mahlelement aufweist, wobei das erste Mahlelement relativ zum zweiten Mahlelement derart um eine Drehachse drehbar ist, dass Kaffeebohnen zwischen die beiden Mahlelemente gebracht und zu einem Kaffeepulver gemahlen werden;
- ein drehbar gelagertes Mitnehmerrad, welches unterhalb der Mahleinrichtung drehbar gelagert ist und dazu dient, das von der Mahleinrichtung gemahlene Kaffeepulver weiter zu transportieren;
- einen Austrittskanal, über welchen das gemahlene Kaffeepulver das Mahlwerk verlassen kann, wobei das Pulver mittels des Mitnehmerrades zum Austrittskanal geleitet wird.

Es gibt verschiedene Typen von Mahleinrichtungen, welche sich hinsichtlich der Form und Anordnung der Mahlelemente unterscheiden, z.B. Kegelmahlwerke, Scheibenmahlwerke, usw. Bekannt sind verschiedene Formen von Mitnehmerrädern. Ein Mitnehmerrad kann an der Oberseite einen sich um die Drehachse des Mitnehmerrades erstreckenden Bereich (im Folgenden "Transportbereich") aufweisen, auf welchen das von der Mahleinrichtung gemahlene Kaffeepulver fallen kann. Damit das von der Mahleinrichtung gemahlene Kaffeepulver auf den Transportbereich des Mitnehmerrades fallen kann, muss das Mitnehmerrad entsprechend relativ zur Mahleinrichtung angeordnet sein.

Beispielsweise sind Mahlwerke mit einem Mitnehmerrad bekannt, welche konisch ausgebildet ist (siehe EP-A-1964498, Fig. 1). In DE-A-4418139 ist ein Mitnehmerrad (auch "Austragsteller" genannt) gezeigt, das an seinem äusseren Rand mit sogenannten nach oben gerichteten Windflügeln versehen ist (siehe Figuren 3 und 4). Der Transportbereich dieses Mitnehmerrades ist ganz geringfügig kegelförmig ausgebildet, d.h. flach radial nach aussen linear abfallend. Durch die Drehung des Mitnehmerrades wird auf dem Transportbereich befindliches Kaffeepulver einerseits um die Drehachse des Mitnehmerrades mitbewegt und andererseits durch eine Zentrifugalkraft radial nach aussen bewegt. Da der Transportbereich geringfügig linear abfallend ist, wird die radial nach aussen gerichtete Bewegung zusätzlich unterstützt.

Bekannte Mitnehmerräder können mehrere Mitnehmerflügel aufweisen, welche auf der Oberseite des Mitnehmerrades im Transportbereich angeordnet sind und sich radial zur Drehachse erstrecken. Diese Mitnehmerflügel fördern gemahlenes Kaffeepulver bei einer Rotation des Mitnehmerrades in Drehrichtung vor sich her, d.h. längs eines Pfades um die Drehachse herum.

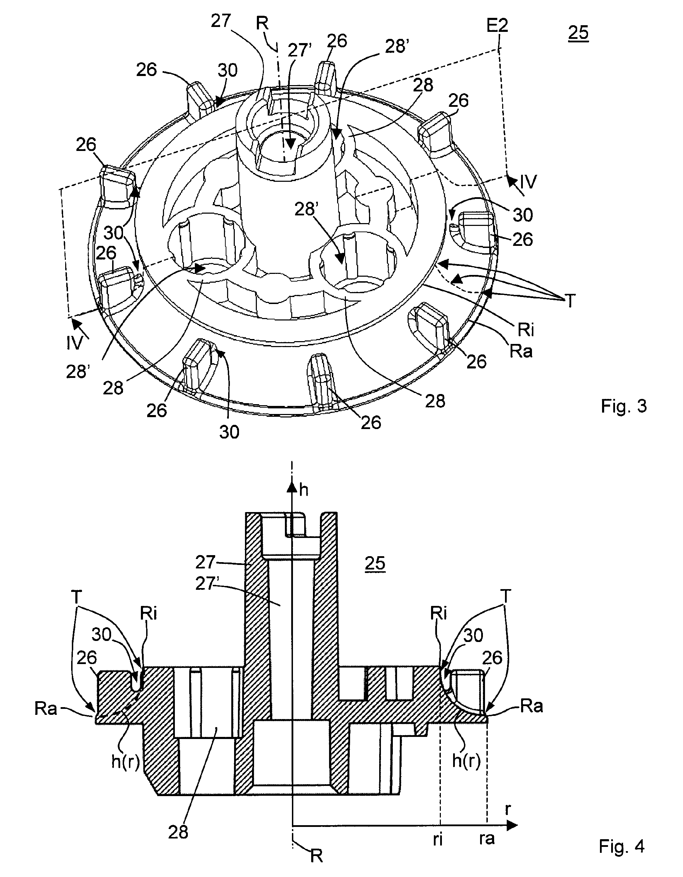

Aus DE-A-441813 sind Mitnehmerflügel ("Windflügel 21" gemäss Fig. 3) bekannt, welche am äusseren Rand des Mitnehmerrades (9) angeordnet sind und sich über eine relativ kurze Distanz (verglichen mit der Breite des Transportbereichs) des Mitnehmerrades erstrecken. Nachteilig ist, dass das Kaffeepulver mittels dieser Mitnehmerflügel nicht sehr effizient um die Drehachse befördert wird, sondern eher verwirbelt. Auf das Mitnehmerrad fallendes Pulver bleibt während mehrerer Umdrehungen des Mitnehmerrades im Transportbereich, bevor es den Austrittskanal erreicht, und somit ergibt sich eine geringe Förderleistung.

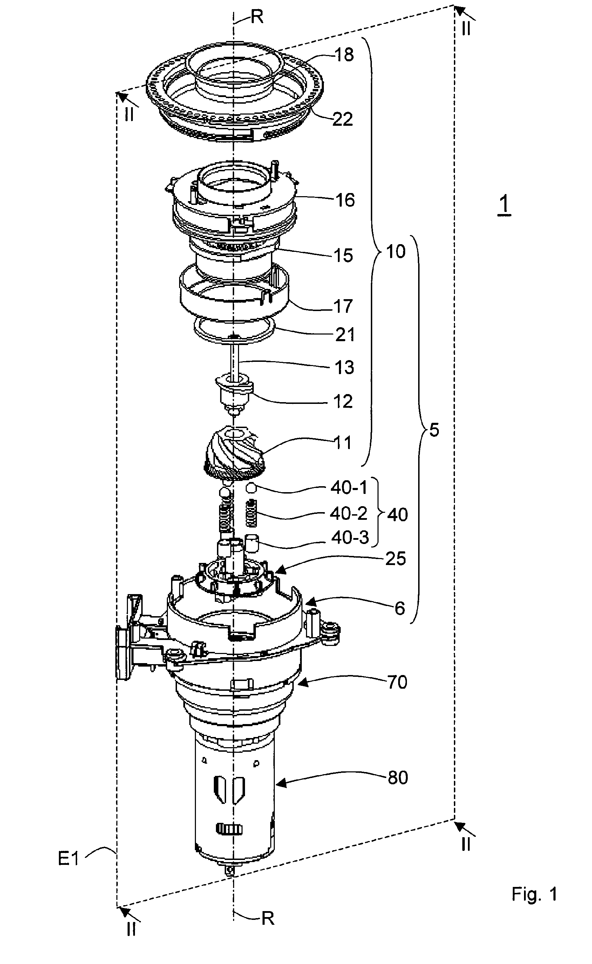

In EP-A-1964498 erstrecken sich die Mitnehmerflügel ("ribs 261" gemäss Fig. 1 und Abschnitt [0013]) radial zur Drehachse des Mitnehmerrades und deren Höhe nimmt in Richtung auf die Drehachse zu null hin ab. Dadurch ergibt sich der Nachteil, dass das gemahlene Pulver auf die Oberseite des Mitnehmerflügels rutschen kann, was zu Verstopfungen führt, sodass eine Rotation des Mitnehmerrades gehemmt wird bzw. das Mitnehmerrad blockiert wird. Abgestandenes Kaffeepulver kann sich auf den Mitnehmerflügeln sammeln und mit frisch gemahlenem Pulver mischen, was den Geschmack des gebrühten Kaffees beeinträchtigt.

Der vorliegenden Erfindung liegt die Aufgabe zugrunde, die genannten Nachteile zu vermeiden, und ein Mahlwerk anzugeben, bei welchem das gemahlene Kaffeepulver schnell und vollständig zum Austrittskanal befördert wird.

Diese Aufgabe wird gelöst durch ein Mahlwerk mit den Merkmalen des Patentanspruchs 1.

Das erfindungsgemässe Mahlwerk, welches zum Mahlen von Kaffeebohnen dient, ist mit einem ersten Mahlelement und einem zweiten Mahlelement versehen, wobei die beiden Mahlelemente relativ zueinander derart drehbar sind, dass Kaffeebohnen durch die Mahlelemente zu einem Kaffeepulver vermahlt werden. Ferner ist ein mit dem ersten Mahlelement drehbares Mitnehmerrad vorgesehen, welches dazu dient, auf seinem Randbereich das gemahlene Kaffeepulver über einen Austrittskanal aus dem Mahlwerk hinaus zu führen. Der Randbereich des Mitnehmerrades ist zu den Mahlelementen hin verjüngt mit einem konkaven Profil derart ausgebildet, dass ein innerer hoher Rand und ein äusserer tiefer Rand gebildet sind, und das Mitnehmerrad mehrere im Randbereich über den Umfang verteilte Mitnehmerflügel aufweist.

Das erfindungsgemässe Mahlwerk hat den grossen Vorteil, dass es sehr kompakt ist und eine verbesserte Förderleistung gegenüber herkömmlichen Mahlwerken aufweist. Die spezielle Ausbildung des Mitnehmerrades mit den Mitnehmerflügeln bewirkt, dass gemahlenes Kaffeepulver sehr schnell aus der Mahlvorrichtung in den Austrittskanal befördert wird. Weiterhin ist die Restmenge Kaffeepulver - d.h. das nach Beenden eines Mahlvorgangs auf dem Mitnehmerrad und im Austrittskanal verbleibende gemahlene Kaffeepulver - wesentlich geringer.

Weitere Vorteile ergeben sich aus der untenstehenden Beschreibung und den Unteransprüchen.

Weitere Einzelheiten der Erfindung und insbesondere beispielhafte Ausführungsformen der erfindungsgemässen Vorrichtung werden im Folgenden anhand der beigefügten Zeichnungen erläutert. Es zeigen:
- Fig. 1: eine Explosionsdarstellung eines Mahlwerks mit einer Mahleinrichtung und einem Mitnehmerrad;

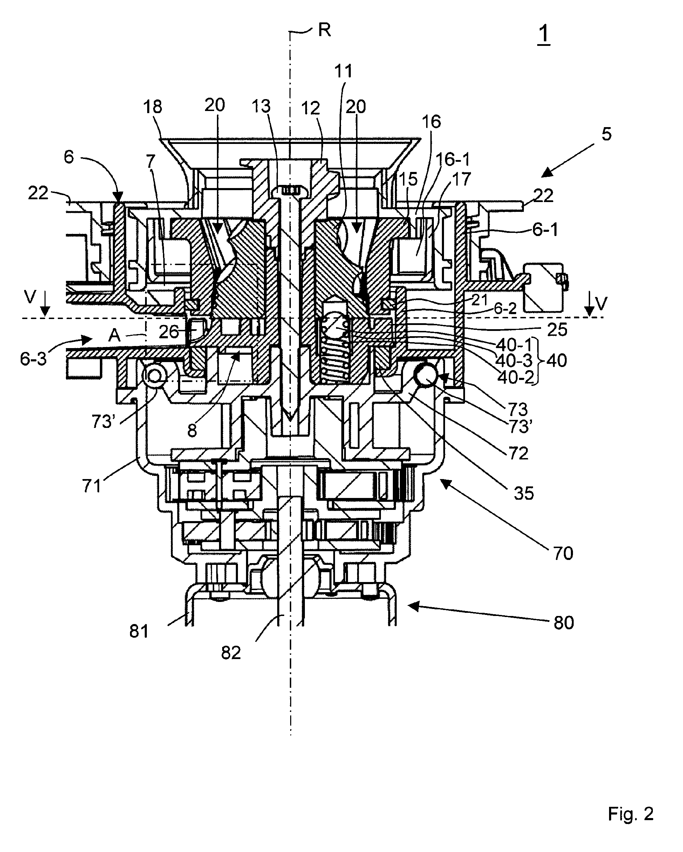

- Fig. 2: das Mahlwerk gemäss Fig. 1 in einem Querschnitt durch die Ebene E1 gemäss Fig. 1;
- Fig. 3: eine perspektivische Ansicht des Mitnehmerrades gemäss Fig. 1;
- Fig. 4: das Mitnehmerrad gemäss Fig. 3 in einem Querschnitt durch die Ebene E2 gemäss Fig. 3;

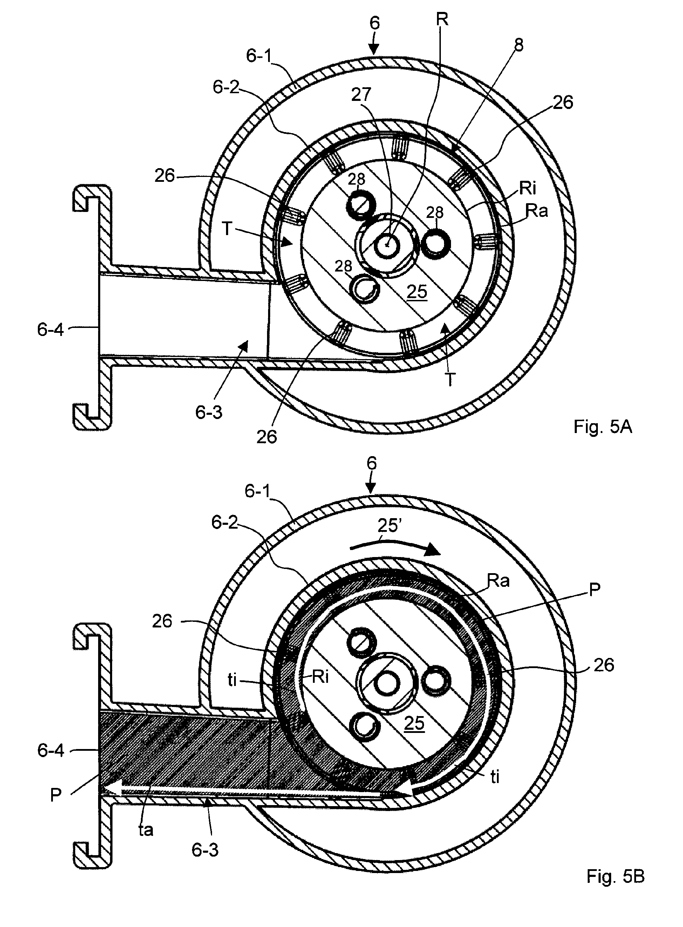

- Fig. 5A: das Mahlwerk gemäss Fig. 2 in einem Querschnitt entlang des Schnitts V-V in einem leeren Zustand (ohne gemahlenes Kaffeepulver);
- Fig. 5A: das Mahlwerk gemäss Fig. 2 in einem Querschnitt entlang des Schnitts V-V in einem gefüllten Zustand (mit gemahlenem Kaffeepulver); und

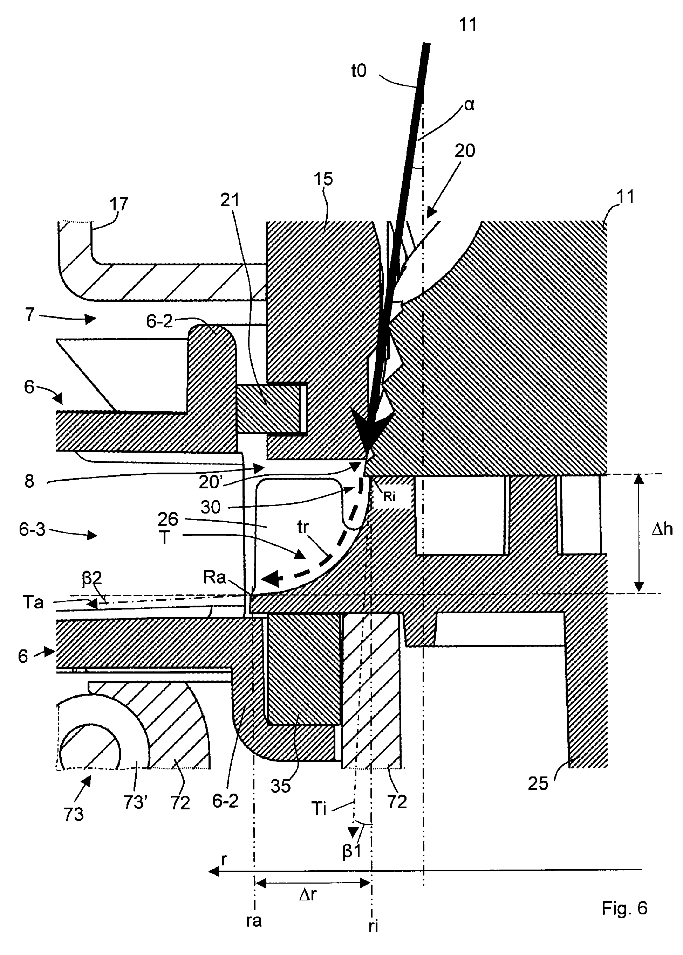

- Fig. 6: einen vergrösserten Ausschnitt der Darstellung des Mahlwerks entsprechend dem Rechteck A in Fig. 2.

Für dieselben Elemente in den Figuren sind jeweils dieselben Bezugszeichen verwendet, wenn nichts anderes erwähnt ist.

In Figur 1 ist (perspektivisch und in Explosionsdarstellung) ein Mahlwerk 1 zum Mahlen von Kaffeebohnen gezeigt, welches aus einer Mahlvorrichtung 5 mit einem Getriebe 70 und einem Antriebsmotor 80 besteht. Die Mahlvorrichtung 5 ist aufgeteilt in eine Mahleinrichtung 10, eine Rutschkupplung 40 und ein Mitnehmerrad 25, wobei diese Teile von einem Gehäuse 6 umgeben sind. Das Mahlwerk 1 ist im vorliegenden Beispiel als "Kegelmahlwerk" ausgebildet. Entsprechend weist die Mahleinrichtung 10 ein erstes Mahlelement 11 (im vorliegenden Beispiel ein Mahlkegel mit schraubenförmigen Messern) und ein zweites Mahlelement 15 (im vorliegenden Beispiel ein Mahlring) auf. Das erste Mahlelement 11 ist drehbar relativ zum zweiten Mahlelement 15 angeordnet. In der Reihenfolge vom Mahlelement 11 nach oben sind ein drehbares Förderelement 12 (im vorliegenden Beispiel ausgebildet als Schnecke), eine Befestigungsschraube 13, ein Dichtungsring 21, ein Befestigungsring 17 für das zweite Mahlelement 15, ein Träger 16, ein Einstellring 22 und ein Kopplungselement 18 vorgesehen. Unterhalb des ersten Mahlelementes 11 ist eine Rutschkupplung 40 angebracht, welche drei Kugeln 40-1, drei Druckfedern 40-2 und drei Hülsen 40-3 aufweist. Bei einem Verklemmen des ersten Mahlelementes 11 Mitnehmerrades 25 sorgt die Rutschkupplung in bekannter Weise dafür, dass das Mitnehmerrad 25 mit dem Antriebsmotor 80 relativ zum ersten Mahlelement 11 gedreht werden kann, sodass die Mahleinrichtung 10 nicht festläuft und der Antriebsmotor 80 somit nicht überhitzen kann.

Figur 2 zeigt einen Querschnitt gemäss der Ebene II-II in Figur 1. Im Gehäuse 6 ist eine erste obere Kammer 7 vorgesehen, welche die eigentliche Mahleinrichtung 10 aufnimmt, und eine zweite untere Kammer 8, welche das Mitnehmerrad 25 aufnimmt und dazu dient, das gemahlene Kaffeepulver weiter zu befördern. Das Gehäuse 6 besteht aus einer ersten äusseren Wand 6-1, welche die erste Kammer 7 begrenzt, einer zweiten Wand 6-2, welche die zweite Kammer 8 begrenzt, ein Austrittskanal 6-3 und eine Austrittsöffnung 6-4, aus welchem das gemahlene Kaffeepulver aus dem Mahlwerk 1 abgegeben wird. Das drehbare Förderelement (Schnecke) 12 dient dazu, das Mahlgut oder die Kaffeebohnen entlang der Drehachse R in den Eintrittsspalt 20 zwischen dem ersten Mahlelement 11 und dem zweiten Mahlelement 15 zu befördern. Mit der Schraube 13 sind das erste Mahlelement 11, das Förderelement 12 und das Mitnehmerrad 25 an einem Antriebselement 72 des Getriebes 70 befestigt. Der Träger 16 weist Schnappelemente 16-1 zum Halten des zweiten Mahlelements 15 auf.

Der Befestigungsring 17 ist am Träger 16 fixiert, um die Schnappelemente 16 zu verriegeln, so dass das zweite Mahlelement 15 fest am Träger 16 gehalten ist. Das ringförmige Kopplungselement 18 besteht aus einem elastischen Material (z.B. Kunststoff) und ist auf dem Träger 16 aufgesetzt, um einen von oben aufsetzbaren Vorratsbehälter für das Mahlgut (nicht dargestellt) auf dem Mahlwerk 1 anzukoppeln. Der Dichtungsring 21 ist als Flachring aus Kunststoff ausgebildet und zwischen dem zweiten Mahlelement 15 und dem Gehäuse 6 eingeklemmt, um zu verhindern, dass gemahlenes Kaffeepulver nach oben entweichen kann. Der Einstellring 22 ist drehbar um die Drehachse R am Gehäuse 6 gelagert, d.h. mechanisch gekoppelt am Träger 16, so dass der Einstellring 22 den Träger 16 mit dem zweiten Mahlelement 15 in Richtung der Drehachse R nach oben oder nach unten verschiebt, womit der Mahlgrad des Kaffees eingestellt wird. Das Mitnehmerrad 25 dient zum Transportieren des gemahlenen Kaffeepulvers und ist um die Drehachse R drehbar gelagert und über die Kupplung 40 an das erste Mahlelement 11 gekoppelt. Eine Flachdichtung 35 (in der Regel aus Filz) dichtet die Unterseite des Mitnehmerrades 25 gegen das Gehäuse 6 ab und verhindert somit ein Entweichen des gemahlenen Kaffeepulvers nach unten. Das Getriebe 70 besteht aus einem Getriebe-Gehäuse 71, einem Antriebselement 72, welches zum Antreiben des ersten Mahlelements 11 und der Mitnehmerflügel 26 dient, und einem Wälzlager 73 mit Kugeln 73', welches das Antriebselement 72 am Getriebe-Gehäuse 71 führt. Vom Antriebsmotor 80 sind teilweise das Motorgehäuse 81 und eine Antriebswelle 82 des Motors 82 zu sehen.

Die Figuren 3 und 4 zeigen das Mitnehmerrad 25 mit neun gleichmässig über den Umfang verteilten, im Wesentlichen quaderförmigen Mitnehmerflügeln 26. Figur 4 zeigt ein Querschnitt längs der Ebene E2 in Richtung der Pfeile IV. Diese Mitnehmerflügel 26 dienen zum Befördern des gemahlenen Kaffeepulvers bei einer Rotation des Mitnehmerrades 25 um die Drehachse R. Jeder Mitnehmerflügel 26 nimmt bei einer Rotation des Mitnehmerrades 25 eine bestimmte Menge Kaffeepulver mit und schiebt diese in der Drehrichtung vor sich her. Eine Hülse 27 mit einer zentralen Bohrung 27' ist an dem Mitnehmerrad 25 vorgesehen, um das Mitnehmerrad 25 auf einen komplementär zur Hülse 27 ausgebildeten Abschnitt des Antriebselements 72 aufzusetzen. Die Hülse 27 dient ferner zur Durchführung der Befestigungsschraube 13, um das Mitnehmerrad 25 am Antriebselement 72 zu befestigen. Um die Hülse 27 sind drei Kreiszylinder 28 mit jeweils einer Bohrung 28' angeordnet, welche zur Aufnahme der Komponenten der Rutschkupplung 40 dienen.

Das Mitnehmerrad 25 weist einen Transportbereich T auf, der zu den Mahlelementen 11 und 15 hin verjüngt mit einem konkaven Profil ausgebildet ist, so dass ein innerer hoher Rand Ri und ein äusserer tiefer Rand Ra gebildet ist. Der innere Rand Ri weist einen kleineren Radius ri zur Drehachse R auf, und der äussere Rand Ra weist einen grösseren Radius ra auf. Das konkave Profil des Mitnehmerrades 25 wird durch eine Kurve mit der Formel h(r) beschrieben, welche die Höhe des Transportbereichs T (bezüglich einer zur Drehachse R senkrechten Ebene) in Abhängigkeit vom Abstands r von der Drehachse R im Bereich zwischen dem inneren Rand Ri und dem äusseren Rand Ra beschreibt. Zwischen dem inneren Rand Ri und dem Mitnehmerflügel 26 ist ein Spalt 30 in dem Mitnehmerrad 25 vorgesehen, welche mit einem an der Mahleinrichtung 10 ausgebildeten Austrittsspalt 20' für Kaffeepulver (siehe Figur 6) fluchtet. Dieser Spalt 30 verhindert, dass das von der Mahleinrichtung 10 gemahlene Kaffeepulver (welches über den Austrittsspalt 20' auf den Transportbereich T des Mitnehmerrads 25 gelangt) auf die Oberseite des Mitnehmerflügels 26 fällt, sodass eine Verstopfung der zweiten Kammer 8 mit Kaffeepulver verhindert wird.

Die Figuren 5A und 5B zeigen einen Querschnitt längs der Linie V-V in Richtung der Pfeile V der Figur 2. In Figur 5A ist das Mitnehmerrad 25 ohne Kaffeepulver dargestellt, in Figur 5B mit Kaffeepulver P. Der Pfeil 25' zeigt die Drehrichtung des Mitnehmerrades 25. Ein Pfeil ti in Fig. 5B beschreibt schematisch einen Transportpfad für Kaffeepulver in der zweiten Kammer 8 auf dem Transportbereich T des Mitnehmerrads 25 nach dem Austritt des Kaffeepulvers aus Mahleinrichtung 10 (aus dem Austrittspalt 20' gemäss Fig. 6), beginnend in der Nähe des inneren Randes Ri. Wie der Pfeil ti in Fig. 5B schematisch andeutet, findet eine Verschiebung des Kaffeepulvers zwischen zwei Mitnehmerflügeln 26 nach aussen statt, bedingt durch die konkave Form des Profils h(r) und durch die Zentrifugalkräfte, welche durch die Rotation des Mitnehmerrades 25 entstehen. Damit wird gewährleistet, dass das gemahlene Kaffeepulver nach einer einzigen Umdrehung des Mitnehmerrades 25 in den Austrittskanal 6-3 zur Austrittsöffnung 6-4 befördert wird. Der Querschnitt des Austrittskanals 6-4 entspricht dabei etwa der Abstand zwischen zwei Mitnehmerflügeln.

Figur 6 zeigt eine Vergrösserung des gestrichelten Ausschnitts A in Figur 2. Mit dem Pfeil t0 wird die Richtung des frisch gemahlenen Kaffeepulvers im Eintrittsspalt 20 zwischen dem ersten und zweiten Mahlelement 11 und 15 charakterisiert. Mit dem Pfeil tr wird die Richtung der Bewegung des aus dem Austrittsspalt 20' austretenden gemahlenen Kaffeepulvers vom hohen inneren Rand Ri zum tiefen äusseren Rand Ra gezeigt. Die beiden Pfeile t0 und tr betreffen nur die radialen Komponenten der Bewegung. Wie ersichtlich, ist der Pfeil tr entsprechend der konkaven Form des Profils h(r) gekrümmt. Die radiale Erstreckung (bzw. Breite) Δr des konkaven Profils h(r) ist durch die Differenz zwischen dem Radius ra des äusseren Randes Ra und dem Radius ri des inneren Randes Ri bestimmt. Mit Ti ist die Tangente an der Kurve h(r) am inneren Rand Ri in radialer Richtung angegeben. Sie weist einen Winkel β1 mit der Senkrechten (parallel zur Drehachse R) auf. Mit Ta ist die Tangente an der Kurve h(r) am äusseren Rand Ra in radialer Richtung bezeichnet, welche einen Winkel β2 mit der Horizontalen (senkrecht zur Drehachse R) aufweist. Der Einfallswinkel α des gemahlenen Kaffeepulvers beim Austrittsspalt 20' wird durch den Kegelwinkel des ersten Mahlelements 11 bestimmt und liegt zwischen 0 und 45°, vorzugsweise bei 5°. Der Winkel β1 liegt zwischen 0 und α. Wegen der konkaven Form der Kurve h(r) gilt ferner für den Winkel β1 ≤ arctan (Δr/Δh). Der Winkel β2 liegt zwischen 0 und arctan (Δh/Δr).

Ansonsten kann der Winkel β2 an die Richtung des Austrittskanals 6-3 angepasst sein, d.h. die Tangente Ta kann beispielsweise parallel zu einer Längsachse des Austrittskanals 6-3 ausgerichtet sein. Im vorliegenden Beispiel ist der Austrittskanal 6-3 horizontal ausgerichtet. Letzteres hat den Vorteil, dass eine besonders geringe Bauhöhe des Mahlwerks 1 erreicht werden kann, aber den Nachteil, dass nach dem Mahlen Kaffeepulver im Austrittskanal 6-3 verbleibt.

Das konkave Profil h(r) als konkav gekrümmte Kurve hat folgende wichtige Auswirkungen:
a) Der Transportbereich T hat am inneren Rand Ri des Transportbereichs eine grössere Steigung, verglichen mit einem linearen Höhenprofil bei gleichen Erstreckungen Δh und Δr. Die grössere Steigung führt zu einem effizienten Transport von Kaffeepulver in radialer Richtung nach aussen, unter der Voraussetzung, dass das Kaffeepulver in der Nähe des inneren Randes Ri auf den Transportbereich T fällt. Dadurch erreicht man eine Verbesserung der Förderleistung.
b) In der zweiten Kammer 8, in welcher das Mitnehmerrad 25 angeordnet ist, steht wegen der Ausbildung des Höhenprofils h(r) als konkav gekrümmte Kurve ein grösseres Volumen zur Aufnahme von Pulver zur Verfügung, verglichen mit einem linearen Höhenprofil bei gleichen Erstreckungen Δh und Δr. Der Transportbereich T kann folglich eine grössere Menge Pulver aufnehmen, was zu einer Steigerung der Transportkapazität führt.

Die Parameter Δh und Δr und die Krümmung der Kurve h(r) dienen einer Optimierung:
- a) und b) bewirken eine Verbesserung der Förderleistung (d.h. die Menge Kaffeepulver, welche pro Umdrehung des Mitnehmerrades den Austrittskanal verlässt),
- Δh, Δr und die Krümmung der Kurve h(r) bestimmen die Grösse der Restmenge, welche möglichst klein sein soll,
- Δh, Δr und die Krümmung der Kurve h(r) werden so gewählt, dass im Wesentlichen Kaffeepulver, welches bei einer Umdrehung des ersten Mahlelements 11 erzeugt wird und auf das Mitnehmerrad 25 fällt, im Wesentlichen spätestens nach einer einzigen Umdrehung des Mitnehmerrades 25 den Austrittskanal 6-3 erreicht.

Im vorliegenden Fall ist die Kurve h(r) kreisförmig mit einem Radius, welcher der Breite Δr des Transportbereichs T entspricht. Die Kurve h(r) kann jedoch auch hyperbolisch oder parabolisch geformt oder auf eine andere Weise konkave gekrümmt sein.

Bezüglich der Mitnehmer-Flügel 26 ist relevant, dass sich jeder Mitnehmerflügel 26 radial derart erstreckt, dass ein Spalt oder eine Lücke 30 zwischen dem Mitnehmerflügel 26 und dem inneren Rand des Ri des Transportbereichs ausgebildet ist. Diese Lücke 30 soll in radialer Richtung möglichst klein sein, aber mindestens so breit, dass von der Mahleinrichtung abgegebenes Kaffeepulver nicht auf die Oberseite der Mitnehmerflügel 26 fallen kann. Damit werden Verstopfungen durch Kaffeepulver in der Kammer 8 und im Austrittskanal 6-3 verhindert und wird sichergestellt, dass stets frisch gemahlenes Kaffeepulver über den Transportbereich T zum Austrittskanal 6-3 transportiert werden kann.

Das Kaffeepulver wird aufgrund der konkaven Form der Kurve h(r) auf dem Transportbereicht T gebündelt, komprimiert und als kompakter Strang direkt in den Austrittskanal 6-3 transportiert. Im Betrieb des Mahlwerks 1 wird ein derartiger Strang aus komprimiertem Kaffeepulver kontinuierlich aus der Austrittsöffnung 6-4 gefördert und zur weiteren Verwendung bereitgestellt, z.B. in einer Brüheinheit einer automatischen Kaffeemaschine (nicht dargestellt).

Mit dem Mahlwerk 1 fällt (bei entsprechender Wahl von Δh, Δr und der Krümmung der Kurve h(r)) eine geringe Restmenge von etwa 1 bis 1,5 Gramm in der Kammer 8 des Mitnehmerrades 25 an, so dass stets ein hoher Anteil an frisch gemahlenem Kaffeepulver vorhanden ist, selbst wenn vom Mahlwerk 1 Kaffeepulver für eine Kaffeespezialität bereitgestellt werden soll, welche aus einer geringen Kaffeepulver gebrüht wird, beispielsweise aus etwa 10-12 Gramm Kaffeepulver im Falle eines Espresso.

## Patentansprüche

1. Mahlwerk (1), welches zum Mahlen von Kaffeebohnen dient, mit einem ersten Mahlelement (11) und einem zweiten Mahlelement (15), wobei die beiden Mahlelemente (11, 15) relativ zueinander derart drehbar sind, dass Kaffeebohnen durch die Mahlelemente zu einem Kaffeepulver vermahlt werden, und mit einer mit dem ersten Mahlelement drehbaren Mitnehmerrad (25), welche dazu dient, auf seinem Randbereich das gemahlene Kaffeepulver über einen Austrittskanal (6-3) aus dem Mahlwerk hinaus zu führen, **dadurch gekennzeichnet, dass**
der Randbereich des Mitnehmerrades (25) zu den Mahlelementen (11, 15) hin verjüngt mit einem konkaven Profil (h(r)) ausgebildet ist, derart, dass ein innerer hoher Rand (Ri) und ein äusserer tiefer Rand (Ra) gebildet sind, und das Mitnehmerrad (25) mehrere im Randbereich über den Umfang verteilte Mitnehmerflügel (26) aufweist.

2. Mahlwerk nach Anspruch 1, **dadurch gekennzeichnet, dass** die Mitnehmerflügel (26) radial auf dem Mitnehmerrad (25) ausgerichtet sind.

3. Mahlwerk nach Anspruch 1 oder 2, **dadurch gekennzeichnet, dass** die Mitnehmerflügel (26) in einem regelmässigen Abstand zueinander über dem Umfang verteilt sind.

4. Mahlwerk nach einem der Ansprüche 1 bis 3, **dadurch gekennzeichnet, dass** zwischen dem Mitnehmerflügel (26) und dem inneren hohen Rand (Ri) ein Spalt (30) vorgesehen ist, derart, dass ein zwischen dem ersten Mahlelement (11) und dem zweiten Mahlelement (15) ausgebildeter Austrittsspalt (20') für das gemahlene Kaffeepulver in den Spalt (30) mündet, wobei der Spalt (30) dazu dient, das gemahlene Kaffeepulver direkt zu übernehmen.

5. Mahlwerk nach einem der Ansprüche 1 bis 4, **dadurch gekennzeichnet, dass** die Mitnehmerflügel (26) im Wesentlichen quaderförmig ausgebildet sind.

6. Mahlwerk nach einem der Ansprüche 1 bis 5, **dadurch gekennzeichnet, dass** die Höhe der Mitnehmerflügel (26) der Höhe des inneren Rands (Ri) entspricht.

7. Mahlwerk nach einem der Ansprüche 1 bis 6, **dadurch gekennzeichnet, dass** das konkave Profil (h(r)) im Querschnitt kreisförmig ist.

8. Mahlwerk nach Anspruch 7, **dadurch gekennzeichnet, dass** der Kreisradius des konkaven Profils (h(r)) dem Abstand zwischen dem inneren Rand (Ri) und dem äusseren Rand (Ra) entspricht.

9. Mahlwerk nach einem der Ansprüche 1 bis 6, **dadurch gekennzeichnet, dass** das konkave Profil (h(r)) im Querschnitt hyperbolisch oder parabolisch ist.

10. Mahlwerk nach einem der Ansprüche 1 bis 9, **dadurch gekennzeichnet, dass** der Austrittskanal (6-3) derart geformt ist, dass dessen Höhe im Wesentlichen der Höhe des Mitnehmerrad (25) und dessen Breite im Wesentlichen dem Abstand zwischen zwei Mitnehmerflügeln (26) entspricht.
